(19) Europäisches Patentamt
European Patent Office
Office européen des brevets

(11) **EP 4 712 336 A1**

(12) **EUROPEAN PATENT APPLICATION**

(43) Date of publication:
**18.03.2026** Bulletin 2026/12

(21) Application number: **24200603.9**

(22) Date of filing: **16.09.2024**

(51) International Patent Classification (IPC):
**H02P 25/022** (2016.01) **H02P 27/08** (2006.01)

(52) Cooperative Patent Classification (CPC):
**H02P 27/08; H02P 25/022**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **VOLVO TRUCK CORPORATION
405 08 Göteborg (SE)**

(72) Inventors:
• **HALL, Sebastian
413 17 GÖTEBORG (SE)**
• **OTTOSSON, Jonas
311 79 FALKENBERG (SE)**

(74) Representative: **Ström & Gulliksson AB
P.O. Box 4188
203 13 Malmö (SE)**

(54) **AN ELECTRICALLY EXCITED SYNCHRONOUS MACHINE AND SYSTEM**

(57)     An electrical machine system (10), comprising: an electrically excited synchronous machine (20) comprising a stator (220) having a plurality of stator windings (222), and a rotor (230) having a plurality of rotor windings (236), a transformer (240) comprising a stationary primary winding (242) and a secondary winding (244) arranged on the rotor (230); wherein the electrically excited synchronous machine (20) further comprises a voltage pulse width modulator (246) configured to receive a control signal ($|v|^*$) used to control the field currents of the rotor windings (236); wherein the electrical machine system (10) further comprises an inverter (30) connected to the stator (220) and configured to supply phase currents ($i_a$, $i_b$, $i_c$) to the stator windings (222); and wherein the inverter (30) is further configured to provide the control signal ($|v|^*$) to the voltage pulse width modulator (246).

FIG. 3

# Description

## TECHNICAL FIELD

The disclosure relates generally to electrical machines. In particular aspects, the disclosure relates to electrically excited synchronous machines and systems. The disclosure can be applied to heavy-duty vehicles, such as trucks, buses, and construction equipment, among other vehicle types. Although the disclosure may be described with respect to a particular vehicle, the disclosure is not restricted to any particular vehicle.

## BACKGROUND

Electrically excited synchronous machines (EESMs) have been developed with the aim of reducing the use of magnetic material, and in particular rare earth materials, for electrical machines. The general concept of EESMs is to employ copper windings in the rotor instead of rare earth magnets to generate the magnetic flux in the rotor.

For operation, an EESM requires currents to be transferred to the rotor windings. This is typically achieved either by using carbon brushes, or by using rotating transformers with rectifier circuits on the rotor that create a DC current in the rotor windings. Regardless of which method being used, power electronics and controller circuits must be introduced to control the rotor currents.

In the case of stationary carbon brushes, these are mechanically connected to the rotor windings. This solution benefits from being straight forward and relatively simple. However, durability of the carbon brushes is questionable since they are continuously sliding against the rotor windings. This may be acceptable for passenger cars but can be more problematic for commercial vehicles with significantly higher uptime. The brushes are generally provided with additional power electronics that adds complexity and cost to the inverter.

Another way to supply the rotor windings with current is with a rotating transformer that has one stationary primary winding which is excited with oscillating voltages and currents and a rotating secondary winding that supply the field windings with currents through rectifying bridges. This solution is more complex and introduces more cost due to the additional components. However, the rotating transformer makes it possible to excite the rotor windings without mechanical connection between the rotating and stationary parts, which enhances the durability with a sufficient transformer design.

The excitation of the transformer requires additional power electronics. Since the controller board for the multi-phase inverter that controls the stator currents is generally embedded close to gate drivers and the power electronics, adding additional power electronics that needs to be controlled generally involves changing the inverter design significantly, either by adding power electronics or by removing the controller board.

New and added components introduce cost, especially if complete inverters must be designed specifically for EESMs. In view of this, there is a need for an improved EESM.

## SUMMARY

According to a first aspect of the disclosure, an electrical machine system is provided. The machine system comprises an electrically excited synchronous machine comprising a stator having a plurality of stator windings, and a rotor having a plurality of rotor windings, a transformer comprising a stationary primary winding and a secondary winding arranged on the rotor; wherein the electrically excited synchronous machine further comprises a voltage pulse width modulator configured to receive a control signal used to control the field currents of the rotor windings; wherein the electrical machine system further comprises an inverter connected to the stator and configured to phase currents to the stator windings; wherein the inverter is further configured to provide the control signal to the voltage pulse width modulator. The first aspect of the disclosure may seek to reduce the complexity of inverters for electrically excited synchronous machines, by reducing the number of components and the required design work. A technical benefit may include allowing the inverter to be more or less the same as for existing electrical machines, keeping the torque control algorithm of the machine in the inverter while introducing power electronics integrated with the rotating transformer in the machine housing.

Optionally in some examples, including in at least one preferred example, the control signal is a voltage signal. A technical benefit may include a very simple and easily receivable control signal.

Optionally in some examples, including in at least one preferred example, the control signal is an analogue signal. A technical benefit may include a robust control of the electrically excited synchronous machine, with a reduced requirement of digital and more sophisticated components.

Optionally in some examples, including in at least one preferred example, the control signal is a digital signal. A technical benefit may include a more intelligent and easily configurable control of the electrically excited synchronous machine.

Optionally in some examples, including in at least one preferred example, the voltage pulse width modulator is configured to indirectly control the field currents of the rotor windings by controlling the power supplied to the stationary primary winding. A technical benefit may include using only stationary parts in the housing to achieve the desired control, reducing the complexity on the rotating part of the machine.

Optionally in some examples, including in at least one preferred example, the voltage pulse width modulator is configured to determine the amplitude of a modulated voltage for the stationary primary winding based on the control signal provided by the inverter. A technical benefit may include a simple and robust way to control the operation of the electrically excited synchronous machine.

Optionally in some examples, including in at least one preferred example, the secondary winding of the transformer is connected to the rotor windings via at least one rectifier bridge. A technical benefit may include a simple and robust design on the rotating parts of the machine.

Optionally in some examples, including in at least one preferred example, the voltage pulse width modulator is connected to the stationary primary winding of the transformer via a H-bridge converter. A technical benefit may include a simple and robust design on the stationary parts of the machine.

Optionally in some examples, including in at least one preferred example, the voltage pulse width modulator is integrated in a printed circuit board. A technical benefit may include a cost-effective, yet robust and compact, integration of the voltage pulse width modulator.

Optionally in some examples, including in at least one preferred example, the voltage pulse width modulator is configured to monitor one or more operation parameters, and to communicate the one or more operation parameters to the inverter. A technical benefit may include improved safety functionality.

Optionally in some examples, including in at least one preferred example, the one or more operation parameters comprises at least one safety-related parameter. A technical benefit may include improved ways to increase safety, as direct feedback of critical parameters can be easily monitored.

Optionally in some examples, including in at least one preferred example, the one or more operation parameters comprises a measured current in the stationary primary winding of the transformer and/or a measured current in the secondary winding of the transformer. A technical benefit may include the possibility to closed-loop feedback control.

Optionally in some examples, including in at least one preferred example, the inverter is configured to perform closed-loop control of the control signal based on the measured current in the stationary primary winding of the transformer and/or the measured current in the secondary winding of the transformer. A technical benefit may include improved control accuracy and robustness.

Optionally in some examples, including in at least one preferred example, the inverter comprises an embedded main controller configured to provide the control signal; wherein the control signal is an analogue or digital voltage signal; wherein the voltage pulse width modulator is configured to indirectly control the field currents of the rotor windings by controlling the power supplied to the stationary primary winding; wherein the voltage pulse width modulator is configured to determine the amplitude of a modulated voltage for the stationary primary winding based on the control signal provided by the inverter; wherein the secondary winding of the transformer is connected to the rotor windings via at least one rectifier bridge; wherein the voltage pulse width modulator is connected to the stationary primary winding of the transformer via a H-bridge converter; wherein the voltage pulse width modulator is integrated in a printed circuit board; wherein the voltage pulse width modulator is configured to monitor one or more operation parameters, and to communicate the one or more operation parameters to the inverter; wherein the one or more operation parameters comprises at least one safety-related parameter; wherein the one or more operation parameters comprises a measured current in the stationary primary winding of the transformer and/or a measured current in the secondary winding of the transformer; and wherein the inverter is configured to perform closed-loop control of the control signal based on the measured current in the stationary primary winding of the transformer and/or the measured current in the secondary winding of the transformer. A technical benefit may include that only simple modification of existing inverters is required.

According to a second aspect of the disclosure, an inverter for an electrically excited synchronous machine is provided. The inverter comprises inverter circuitry configured to provide phase currents to an associated electrically excited synchronous machine, and a main controller configured to provide a control signal to a voltage pulse width modulator of the electrically excited synchronous machine. The second aspect of the disclosure may seek to reduce the complexity of inverters for electrically excited synchronous machines, by reducing the number of components and the required design work. A technical benefit may include allowing the inverter to be more or less the same as for existing electrical machines, keeping the torque control algorithm of the machine in the inverter while introducing power electronics integrated with the rotating transformer in the machine housing.

Optionally in some examples, including in at least one preferred example, the control signal is a voltage signal. A technical benefit may include a very simple and easily receivable control signal.

According to a third aspect of the disclosure, a vehicle is provided. The vehicle comprises the electrical machine system of the first aspect, or the inverter of the second aspect. The third aspect of the disclosure may seek to reduce the complexity of inverters for electrically excited synchronous machines, by reducing the number of components and the required design work. A technical benefit may include allowing the inverter to be more or less the same as for existing electrical machines, keeping the torque control algorithm of the machine in the inverter while introducing power electronics integrated with the rotating transformer in the machine housing.

According to a fourth aspect of the disclosure, a method for controlling an electrical machine system is provided. The method comprises: controlling an inverter to provide phase currents to stator windings of an electrically excited synchronous machine; controlling the inverter to provide a control signal to a voltage pulse width modulator, and using the control signal to controlling the field currents of a plurality of rotor windings based on the control signal. The fourth aspect of the disclosure may seek to reduce the complexity of inverters for electrically excited synchronous machines, by reducing the number of components and the required design work. A technical benefit may include allowing the inverter to be more or less the same as for existing electrical machines, keeping the torque control algorithm of the machine in the inverter while introducing power electronics integrated with the rotating transformer in the machine housing.

Optionally in some examples, including in at least one preferred example, the method further comprises controlling the field currents of the rotor windings indirectly by controlling the power supplied to a stationary primary winding of a transformer further comprising a secondary winding arranged on the rotor. A technical benefit may include using only stationary parts in the housing to achieve the desired control, reducing the complexity on the rotating part of the machine.

Optionally in some examples, including in at least one preferred example, the method further comprises monitoring one or more operation parameters, and communicating the one or more operation parameters to the inverter. A technical benefit may include increased safety functionality.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

## BRIEF DESCRIPTION OF THE DRAWINGS

Examples are described in more detail below with reference to the appended drawings.

**FIG. 1** is an exemplary side view of a vehicle according to an example.
**FIG. 2** is an exemplary diagram of an electrical machine system according to an example.
**FIG. 3** is a schematic cross-sectional view of an electrically excited synchronous machine according to an example.
**FIG. 4** is an exemplary diagram of an electrically excited synchronous machine according to an example.
**FIG. 5** is another view of **FIG. 3,** according to an example.
**FIG. 6** is a schematic flow chart of a method for controlling an electrically excited synchronous machine according to an example.

## DETAILED DESCRIPTION

The detailed description set forth below provides information and examples of the disclosed technology with sufficient detail to enable those skilled in the art to practice the disclosure.

With this in mind, this disclosure relates to an electrically excited synchronous machines and specifically to a hardware configuration that allows for the power inverter to be more or less the same as for permanent magnet machines, keeping the torque control algorithm of the machine in the main inverter while introducing power electronics integrated with a rotating transformer in the machine housing. A general idea of the disclosure is to use the inverter to determine and generate a control signal for a voltage pulse width modulator arranged in the electrically excited synchronous machine, and to use this control signal for providing the desired excitation of the rotor windings of the electrically excited synchronous machine.

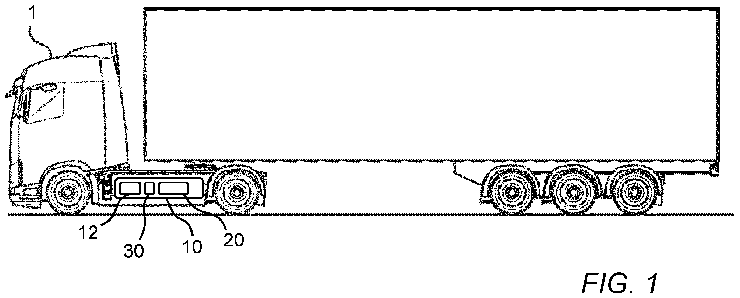

In **FIG. 1** a vehicle **1** is schematically shown. The vehicle **1** may be of any possible type, such as a truck with a trailer as in the shown example. The vehicle **1** may be an electric vehicle, or a hybrid vehicle. The vehicle **1** comprises at least one electrical machine system **10** being powered by an energy storage system **12,** such as one or more rechargeable batteries. The electrical machine system **10** comprises at least one electrically excited synchronous machine **20** and at least one associated inverter **30**. The inverter **30** is connected to the electrically excited synchronous machine **20** by providing phase currents to the electrically excited synchronous machine **20**.

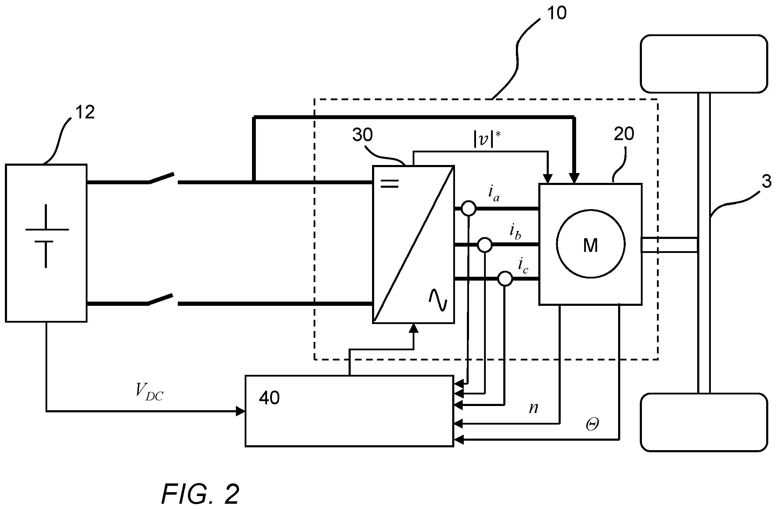

An example of an electrical machine system **10** is shown in **FIG. 2**. The electrical machine system **10** comprises the electrically excited synchronous machine **20** and an inverter **30**. The electrically excited synchronous machine **20** may for example be mechanically connected to a drive axle **3** of the vehicle **1** in order to provide propulsion force to the vehicle **1.**

A machine controller **40** is provided and connected to the electrically excited synchronous machine **20** and to the inverter **30,** as well as to an associated battery **12**. The machine controller **40** is typically configured to perform field-oriented control of the electrically excited synchronous machine **20**. For this, the electrically excited synchronous machine **20** supplies the machine controller **40** with operational parameters, such as the machine speed $n$ and the angular position $\Theta$. Based on these parameters, as well as the DC voltage $V_{DC}$ provided by the battery **12,** the machine controller **40** generates and supplies control signals to the inverter **30** that typically results in a set of phase currents $i_a$, $i_b$, $i_c$ delivered to the electrically excited synchronous machine **20**. As shown in **FIG. 2,** the inverter **30** is further configured to generate a control signal |v|* to the electrically excited synchronous machine **20**. The control signal |v|* is used to control rotor field currents of the electrically excited synchronous machine **20,** as will be further described in the following.

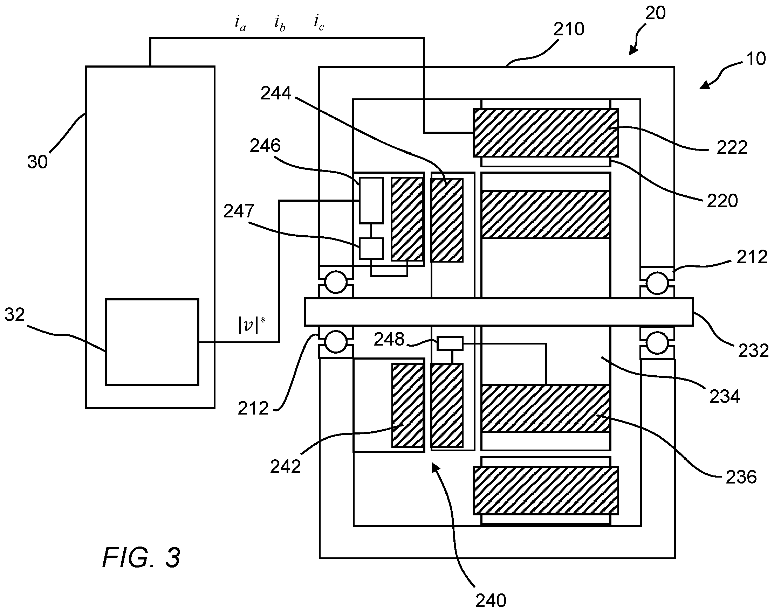

A schematic view of an electrical machine system **10** is shown in **FIG. 3**. The electrical machine system **10** comprises an electrically excited synchronous machine **20** and an inverter **30**. The electrically excited synchronous machine **20** comprises a machine housing **210,** a stator **220,** and a rotor **230**. The stator **220** and the rotor **230** are arranged inside the machine housing **210**.

The stator **220** is fixedly arranged radially outside the rotor **230,** and the stator **220** comprises a plurality of phase windings **222**. The stator **220** has an axial length that allows the stator **220,** including the phase windings **222,** to fit inside the machine housing **210**.

The rotor **230** is consequently arranged radially inside the stator **220**. The rotor **230** comprises a rotor shaft **232** and a rotor core **234**. The rotor shaft **232** is rotationally journalled in the machine housing **210** for example using one or more bearings **212**. The rotor core **234** is rotationally secured to the rotor shaft **232;** when the rotor core **234** is spinning, the rotor shaft **232** rotates as well by the same speed.

The axial length of the rotor core **234** is preferably corresponding to the axial length of the stator **220,** although the rotor core **234** may have any suitable axial length. The rotor core **234** comprises a plurality of rotor windings **236**. The rotor windings **236** will, when they are powered, provide a magnetic field that interacts with the magnetic field generator by the stator **220**.

The electrically excited synchronous machine **20** further comprises a transformer **240**. The transformer **240** comprises a primary winding **242** and a secondary winding **244**. The primary winding **242** is part of the machine housing **210,** i.e. the primary winding **242** is stationary during operation of the electrically excited synchronous machine **20**. The secondary winding **244** is part of the rotor **230,** and is preferably arranged at one axial end of the rotor core **234**. Optionally, the secondary winding **244** of the transformer **240** may be integrated with the rotor core **234**.

In another example, both the primary and the secondary windings **242, 244** of the transformer are forming part of the rotor **230,** such that both windings **242, 244** will rotate with the electrically excited synchronous machine **20**. Alternatively, both the primary and the secondary windings **242, 244** of the transformer **240** are arranged stationary in the machine housing **210**.

The inverter **30** is configured to supply the stator windings **222** with phase currents $i_a$, $i_b$, $i_c$. In addition, the inverter **30** comprises a main controller **32** configured to determine a control signal |v|* for controlling the transformer **240,** and consequently the excitation of the rotor windings **236**.

The transformer **240** comprises a voltage pulse width modulator **246** which is configured to receive the control signal |v|* from the main controller **32** of the inverter **30**. The control signal |v|* is preferably representing a voltage reference, which is used as input to the voltage pulse width modulator **246** of the transformer **240** to determine the amplitude of a modulated voltage that excites the primary winding **242** of the transformer **240**. The voltage amplitude decides the current in the primary winding **242,** which generates a current in the rotating secondary winding **244** of the transformer **240**. The secondary winding **244** is connected to rectifier bridges **248** which are connected to the field windings **236** of the rotor **230**.

The voltage pulse width modulator **246** is preferably configured to generate a modulated signal which is received by an H-bridge **247** which in turn provides the primary winding **242** of the transformer **240** with the desired voltage $v$.

Consequently, it is possible to control the field current with the voltage reference |v|* that is sent out from the inverter **30** that is used to control the phase voltages of the stator **220**. In this configuration, it is possible to control the torque of the machine **20** in an optimal way without adding a significant change in the inverter design.

The communication between the main controller **32** and the voltage pulse width modulator **246** of the transformer **240** can be an analogue or digital signal |v|* depending on what is suitable for the application. Further, the voltage pulse width modulator **246** may be configured to send out monitoring signals to the main controller **32**. This can enable additional safety functionality, and additional feedback signals can allow a closed-loop control if currents in the primary winding **242** and/or the secondary winding **244** of the transformer **240** are measured.

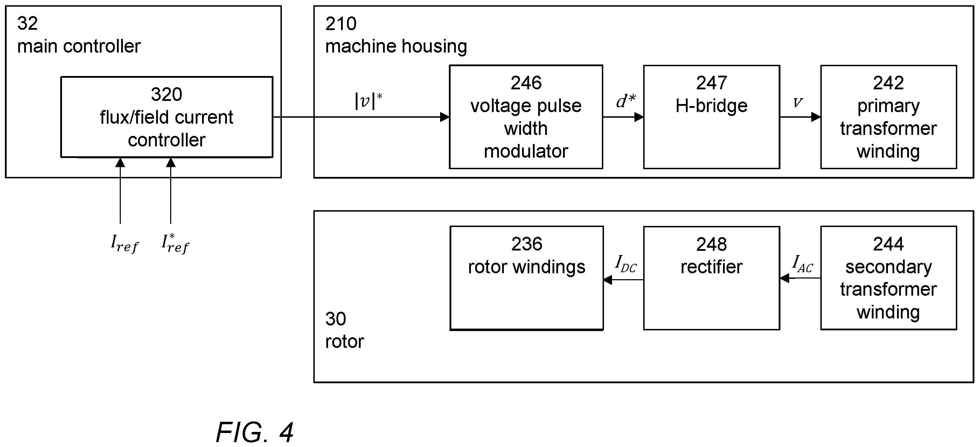

**FIG. 4** is an exemplary diagram of an electrical machine system **10** according to an example, and more specifically of an electrically excited synchronous machine **20** according to an example. A main controller **32** is integrated in an inverter **30** and comprises a flux/field current controller **320** configured to generate a control signal |v|* representing a reference voltage. The reference voltage |v|* is generated based on a requested field current $I_{ref}$ and an actual field current $I_{ref}^*$ in the rotor windings **236**. From these field current parameters parameters, the voltage pulse width modulator **246** of the transformer **240** is configured to generate a modulated signal $d^*$ that is send to an H-bridge **247,** which voltage output $v$ is applied to the primary winding **242** of the transformer **240**. As a result, an AC current $I_{AC}$ will flow through the secondary winding **244** of the transformer **240,** which current $I_{AC}$ will be rectified by one or more rectifiers **248**. The resulting DC current $I_{DC}$ is then used to excite the rotor windings **236**.

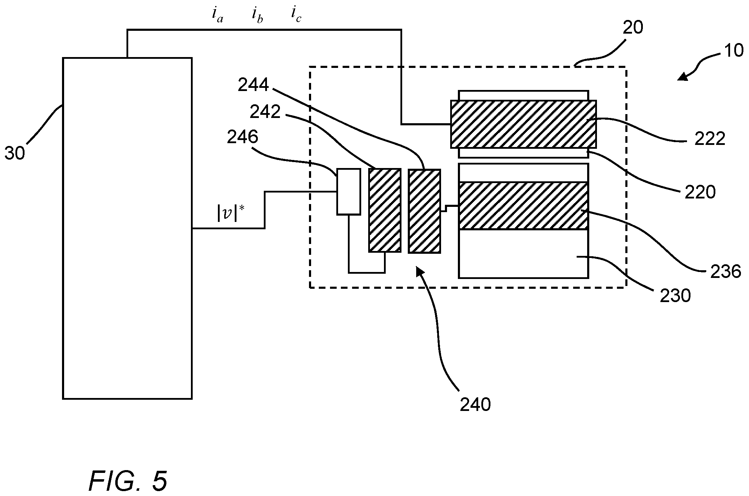

A schematic view of an electrical machine system **10** is shown in **FIG. 5**. The electrical machine system **10** comprises an electrically excited synchronous machine **20**. The electrically excited synchronous machine **20** comprises a stator **220** having a plurality of stator windings **222,** and a rotor **230** having a plurality of rotor windings **236**. Further, the electrically excited synchronous machine **20** comprises a transformer **240** having a stationary primary winding **242** and a secondary winding **244** arranged on the rotor **230**. The electrically excited synchronous machine **20** further comprises a voltage pulse width modulator **246** configured to indirectly control the field currents of the rotor windings **236** based on a control signal $|v|^*$. The electrical machine system **10** further comprises an inverter **30** connected to the stator **220** and configured to supply phase currents $i_a$, $i_b$, $i_c$ to the stator windings **222**. The inverter **30** is further configured to provide the control signal $|v|^*$ to the voltage pulse width modulator **246.**

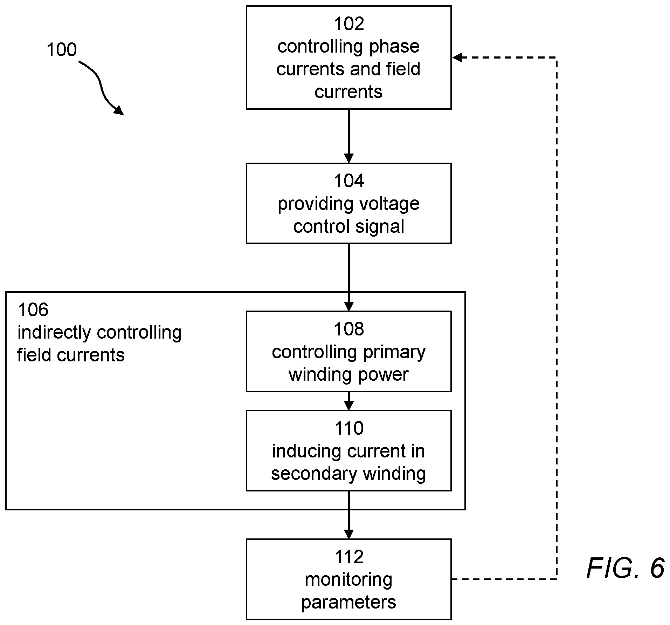

In **FIG. 6** a method **100** for controlling an electrical machine system is schematically shown. The method **100** comprises controlling **102** an inverter to provide phase currents to stator windings of an electrically excited synchronous machine. In parallel, field currents to rotor windings are controlled. The method **100** further comprises controlling **104** the inverter to provide a control signal to a voltage pulse width modulator, and using the control signal to controlling **106** the field currents of a plurality of rotor windings. Preferably, controlling **106** the field currents of the rotor windings is performed indirectly by controlling **108** the power supplied to a stationary primary winding of a transformer, and thereby inducing **110** current in a secondary winding of the transformer arranged on the rotor. The method **100** may further comprise monitoring **112** one or more operation parameters, such as measured currents in the primary winding and/or the secondary winding of the transformer, and sending the one or more monitored operation parameters back to the inverter.

**Example 1.** An electrical machine system (10), comprising: an electrically excited synchronous machine (20) comprising a stator (220) having a plurality of stator windings (222), and a rotor (230) having a plurality of rotor windings (236), a transformer (240) comprising a stationary primary winding (242) and a secondary winding (244) arranged on the rotor (230); wherein the electrically excited synchronous machine (20) further comprises a voltage pulse width modulator (246) configured to receive a control signal ($|v|^*$) used to control the field currents of the rotor windings (236); wherein the electrical machine system (10) further comprises an inverter (30) connected to the stator (220) and configured to supply phase currents ($i_a$, $i_b$, $i_c$) to the stator windings (222); and wherein the inverter (30) is further configured to provide the control signal ($|v|^*$) to the voltage pulse width modulator (246).

**Example 2.** The electrical machine system (10) of Example 1, wherein the control signal ($|v|^*$) is a voltage signal.

**Example 3.** The electrical machine system (10) of any of Examples 1-2, wherein the control signal ($|v|^*$) is an analogue signal.

**Example 4.** The electrical machine system (10) of any of Examples 1-2, wherein the control signal ($|v|^*$) is a digital signal.

**Example 5.** The electrical machine system (10) of any of Examples 1-4, wherein the voltage pulse width modulator (246) is configured to indirectly control the field currents of the rotor windings (236) by controlling the power supplied to the stationary primary winding (242).

**Example 6.** The electrical machine system (10) of Example 5, wherein the voltage pulse width modulator (246) is configured to determine the amplitude of a modulated voltage ($d^*$) for the stationary primary winding (242) based on the control signal ($|v|^*$) provided by the inverter (30).

**Example 7.** The electrical machine system (10) of any of Examples 1-6, wherein the secondary winding (244) of the transformer (240) is connected to the rotor windings (236) via at least one rectifier bridge (248).

**Example 8.** The electrical machine system (10) of any of Examples 1-7, wherein the voltage pulse width modulator (246) is connected to the stationary primary winding (242) of the transformer (240) via a H-bridge converter (247).

**Example 9.** The electrical machine system (10) of any of Examples 1-8, wherein the voltage pulse width modulator (246) is integrated in a printed circuit board.

**Example 10.** The electrical machine system (10) of any of Examples 1-9, wherein the voltage pulse width modulator (246) is configured to monitor one or more operation parameters, and to communicate the one or more operation parameters to the inverter (30).

**Example 11.** The electrical machine system (10) of Example 10, wherein the one or more operation parameters comprises at least one safety-related parameter.

**Example 12.** The electrical machine system (10) of Example 10 or 11, wherein the one or more operation parameters comprises a measured current in the stationary primary winding (242) of the transformer (240) and/or a measured current in the secondary winding (244) of the transformer (240).

**Example 13.** The electrical machine system (10) of Example 12, wherein the inverter (30) is configured to perform closed-loop control of the control signal ($|v|^*$) based on the measured current in the stationary primary winding (242) of the transformer (240) and/or the measured current in the secondary winding (244) of the transformer (240).

**Example 14.** The electrical machine system (10) of Example 1, wherein the inverter (30) comprises an embedded main controller (32) configured to provide the control signal ($|v|^*$); wherein the control signal ($|v|^*$) is an analogue or digital voltage signal; wherein the voltage pulse width modulator (246) is configured to indirectly control the field currents of the rotor windings (236) by controlling the power supplied to the stationary primary winding (242); wherein the voltage pulse width modulator (246) is configured to determine the amplitude of a modulated voltage ($d^*$) for the stationary primary winding (242) based on the control signal ($|v|$*) provided by the inverter (30); wherein the secondary winding (244) of the transformer (240) is connected to the rotor windings (236) via at least one rectifier bridge (248); wherein the voltage pulse width modulator (246) is connected to the stationary primary winding (242) of the transformer (240) via a H-bridge converter (247); wherein the voltage pulse width modulator (246) is integrated in a printed circuit board; wherein the voltage pulse width modulator (246) is configured to monitor one or more operation parameters, and to communicate the one or more operation parameters to the inverter (30); wherein the one or more operation parameters comprises at least one safety-related parameter; wherein the one or more operation parameters comprises a measured current in the stationary primary winding (242) of the transformer (240) and/or a measured current in the secondary winding (244) of the transformer (240); and wherein the inverter (30is configured to perform closed-loop control of the control signal ($|v|$*) based on the measured current in the stationary primary winding (242) of the transformer (240) and/or the measured current in the secondary winding (244) of the transformer (240).

**Example 15.** An inverter for an electrically excited synchronous machine (20), comprising inverter circuitry configured to provide phase currents ($i_a$, $i_b$, $i_c$) to an associated electrically excited synchronous machine (20), and a main controller (32) configured to provide a control signal ($|v|$*) to a voltage pulse width modulator (246) of the electrically excited synchronous machine (20).

**Example 16.** The inverter (30) of Example 15, wherein the control signal ($|v|$*) is a voltage signal.

**Example 17.** A vehicle comprising the electrical machine system (10) according to any of Examples 1-14, or an inverter (30) according to any of Examples 15-16.

**Example 18.** A method for controlling an electrical machine system, comprising: controlling an inverter to provide phase currents to stator windings of an electrically excited synchronous machine; controlling the inverter to provide a control signal to a voltage pulse width modulator, and using the control signal to controlling the field currents of a plurality of rotor windings based on the control signal.

**Example 19.** The method of Example 18, further comprising: controlling the field currents of the rotor windings indirectly by controlling the power supplied to a stationary primary winding of a transformer further comprising a secondary winding arranged on the rotor.

**Example 20.** The method of Example 18 or 19, further comprising: monitoring one or more operation parameters, and communicating the one or more operation parameters to the inverter.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

**Claims**

1.  An electrical machine system (10), comprising:

    an electrically excited synchronous machine (20) comprising a stator (220) having a plurality of stator windings (222), and a rotor (230) having a plurality of rotor windings (236),

a transformer (240) comprising a stationary primary winding (242) and a secondary winding (244) arranged on the rotor (230);

wherein the electrically excited synchronous machine (20) further comprises a voltage pulse width modulator (246) configured to receive a control signal ($|v|^*$) used to control the field currents of the rotor windings (236);

wherein the electrical machine system (10) further comprises an inverter (30) connected to the stator (220) and configured to supply phase currents ($i_a$, $i_b$, $i_c$) to the stator windings (222);

wherein the inverter (30) is further configured to provide the control signal ($|v|^*$) to the voltage pulse width modulator (246).

2. The electrical machine system (10) of claim 1, wherein the control signal ($|v|^*$) is a voltage signal.

3. The electrical machine system (10) of any of claims 1-2, wherein the control signal ($|v|^*$) is an analogue signal.

4. The electrical machine system (10) of any of claims 1-2, wherein the control signal ($|v|^*$) is a digital signal.

5. The electrical machine system (10) of any of claims 1-4, wherein the voltage pulse width modulator (246) is configured to control the field currents of the rotor windings (236) indirectly by controlling the power supplied to the stationary primary winding (242).

6. The electrical machine system (10) of claim 5, wherein the voltage pulse width modulator (246) is configured to determine the amplitude of a modulated voltage (d*) for the stationary primary winding (242) based on the control signal ($|v|^*$) provided by the inverter (30).

7. The electrical machine system (10) of any of claims 1-6, wherein the secondary winding (244) of the transformer (240) is connected to the rotor windings (236) via at least one rectifier bridge (248).

8. The electrical machine system (10) of any of claims 1-7, wherein the voltage pulse width modulator (246) is connected to the stationary primary winding (242) of the transformer (240) via a H-bridge converter (247).

9. The electrical machine system (10) of any of claims 1-8, wherein the voltage pulse width modulator (246) is configured to monitor one or more operation parameters, and to communicate the one or more operation parameters to the inverter (30).

10. The electrical machine system (10) of claim 9, wherein the one or more operation parameters comprises at least one safety-related parameter.

11. The electrical machine system (10) of claim 1,

wherein the inverter (30) comprises an embedded main controller (32) configured to provide the control signal ($|v|^*$);

wherein the control signal ($|v|^*$) is an analogue or digital voltage signal;

wherein the voltage pulse width modulator (246) is configured to control the field currents of the rotor windings (236) indirectly by controlling the power supplied to the stationary primary winding (242);

wherein the voltage pulse width modulator (246) is configured to determine the amplitude of a modulated voltage (d*) for the stationary primary winding (242) based on the control signal ($|v|^*$) provided by the inverter (30);

wherein the secondary winding (244) of the transformer (240) is connected to the rotor windings (236) via at least one rectifier bridge (248);

wherein the voltage pulse width modulator (246) is connected to the stationary primary winding (242) of the transformer (240) via a H-bridge converter (247);

wherein the voltage pulse width modulator (246) is integrated in a printed circuit board;

wherein the voltage pulse width modulator (246) is configured to monitor one or more operation parameters, and to communicate the one or more operation parameters to the inverter (30);

wherein the one or more operation parameters comprises at least one safety-related parameter;

wherein the one or more operation parameters comprises a measured current in the stationary primary winding (242) of the transformer (240) and/or a measured current in the secondary winding (244) of the transformer (240); and

wherein the inverter (30) is configured to perform closed-loop control of the control signal ($|v|^*$) based on the measured current in the stationary primary winding (242) of the transformer (240) and/or the measured current in the secondary winding (244) of the transformer (240).

12. An inverter for an electrically excited synchronous machine (20), comprising inverter circuitry configured to provide phase currents ($i_a$, $i_b$, $i_c$) to an associated electrically excited synchronous machine (20), and a main controller (32) configured to provide a control signal ($|v|^*$) to a voltage pulse width modulator (246) of the electrically excited synchronous machine (20).

**EP 4 712 336 A1**

**13.** A vehicle comprising the electrical machine system (10) according to any of claims 1-11, or an inverter (30) according to claim 12.

**14.** A method for controlling an electrical machine system, comprising:

controlling an inverter to provide phase currents to stator windings of an electrically excited synchronous machine;
controlling the inverter to provide a control signal to a voltage pulse width modulator, and controlling the field currents of a plurality of rotor windings based on a control signal.

**15.** The method of claim 14, further comprising: controlling the field currents of the rotor windings indirectly by controlling the power supplied to a stationary primary winding of a transformer further comprising a secondary winding arranged on the rotor.

FIG. 1

EP 4 712 336 A1

FIG. 2

FIG. 3

EP 4 712 336 A1

```
┌─────────────────────────────┐   ┌──────────────────────────────────────────────────────────────────────┐
│ 32                          │   │ 210                                                                    │
│ main controller             │   │ machine housing                                                        │
│                             │   │                    ┌──────────────┐   ┌──────────┐   ┌──────────────┐  │
│   ┌─────────────────────┐   │   │                    │     246      │   │   247    │   │     242      │  │
│   │        320          │   │   │         |v|*        │ voltage pulse│d*│  H-bridge │ V │   primary    │  │
│   │   flux/field current│───┼───┼────────────────────▶│    width     │──▶│          │──▶│ transformer  │  │
│   │     controller      │   │   │                    │  modulator   │   │          │   │   winding    │  │
│   └─────────────────────┘   │   │                    └──────────────┘   └──────────┘   └──────────────┘  │
│         ▲       ▲           │   └──────────────────────────────────────────────────────────────────────┘
│         │       │           │
└─────────────────────────────┘   ┌──────────────────────────────────────────────────────────────────────┐
          │       │               │                                                                        │
        I_ref   I*_ref            │                    ┌──────────────┐   ┌──────────┐   ┌──────────────┐  │
                                  │                    │     236      │   │   248    │   │     244      │  │
                                  │                    │    rotor     │I_DC│ rectifier│I_AC│  secondary   │  │
                                  │                    │   windings   │◀──│          │◀──│ transformer  │  │
                                  │                    └──────────────┘   └──────────┘   │   winding    │  │
                                  │  30                                                   └──────────────┘  │
                                  │  rotor                                                                  │
                                  └──────────────────────────────────────────────────────────────────────┘
```

*FIG. 4*

*FIG. 5*

100

102 controlling phase currents and field currents

104 providing voltage control signal

106 indirectly controlling field currents

108 controlling primary winding power

110 inducing current in secondary winding

112 monitoring parameters

*FIG. 6*

Europäisches
Patentamt

European
Patent Office

Office européen
des brevets

## EUROPEAN SEARCH REPORT

**Application Number**

EP 24 20 0603

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SANTANTONIO IRENE ET AL: "High-Frequency Rotor Excitation System Part I: Modeling Method and Optimization", 2023 AEIT INTERNATIONAL CONFERENCE ON ELECTRICAL AND ELECTRONIC TECHNOLOGIES FOR AUTOMOTIVE (AEIT AUTOMOTIVE), AEIT, 17 July 2023 (2023-07-17), pages 1-6, XP034405588, [retrieved on 2023-08-23] * abstract; figures 1, 2, 3, 5, 6 * * Introduction; Sections II, III * ----- | 1-15 | INV. H02P25/022 H02P27/08 |
| X | BERWEILER BJORN ET AL: "Current and Average Temperature Calculation for Electrically Excited Synchronous Machines in Case of Contactless Energy Supply", 2020 INTERNATIONAL CONFERENCE ON ELECTRICAL MACHINES (ICEM), IEEE, vol. 1, 23 August 2020 (2020-08-23), pages 1730-1735, XP033868415, DOI: 10.1109/ICEM49940.2020.9270863 [retrieved on 2020-11-24] * abstract; figures 1, 2 * ----- | 1-15 | |
| A | FALLOWS DANIEL ET AL: "Exciterless Wound-Field Medium-Power Synchronous Machines: Their History and Future", IEEE INDUSTRIAL ELECTRONICS MAGAZINE, IEEE, US, vol. 16, no. 4, 1 December 2022 (2022-12-01), pages 44-51, XP011930727, ISSN: 1932-4529, DOI: 10.1109/MIE.2021.3093024 [retrieved on 2021-07-27] * the whole document * ----- | 1-15 | TECHNICAL FIELDS SEARCHED (IPC) H02P |

The present search report has been drawn up for all claims

| Place of search | Date of completion of the search | Examiner |
|---|---|---|
| Munich | 21 February 2025 | Koteich, Mohamad |

EPO FORM 1503 03.82 (P4C01)